# EUROPEAN PATENT SPECIFICATION

(11) **EP 3 059 429 B1**
(45) Date of publication and mention of the grant of the patent: **22.04.2020**
(21) Application number: 15155849.1
(22) Date of filing: 19.02.2015
(51) Int. Cl.: F02G 5/00, F01K 23/06, F01K 25/08, F02B 43/00, F02G 5/02

(54) **COMBUSTION ENGINE PROVIDED WITH A WASTE HEAT RECOVERY SYSTEM**
VERBRENNUNGSMOTOR MIT EINEM ABWÄRMERÜCKGEWINNUNGSSYSTEM
MOTEUR À COMBUSTION POURVU D'UN SYSTÈME DE RÉCUPÉRATION DE CHALEUR PERDUE

(43) Date of publication of application: 24.08.2016
(73) Proprietor: FPT Motorenforschung AG, 9320 Arbon (CH)
(72) Inventor: Gstrein, Wolfgang, 6900 BREGENZ (AT)
(74) Representative: Franzolin, Luigi

(56) References cited:
- EP-A2- 2 495 422
- WO-A1-00/47874
- WO-A1-2012/027688
- DE-A1-102009 039 551
- DE-A1-102011 117 054
- DE-A1-102012 221 153
- US-A1- 2015 013 328

## Description

### Field of the invention

The present invention relates to the field of the combustion engines provided with system capable to recover energy from the exhaust gasses in order to produce electrical and/or to supplement the combustion engine through a thermodynamic cycle.

### Description of the prior art

The Waste heat recovery systems are well known since a long time in the combustion engine field in order to increase the overall efficiency of the combustion engine.

One of the most valid cycles implemented to recovery energy is the Rankine cycle, usually adopting ethanol, water and refrigerants as working medium.

Several works have been published discussing on the ideal working medium.

Ethanol represents a good compromise between the use of water and refrigerants, the first being more economic and safe, the second being more efficient but less ecologic.

All the simulations/tests account for the various critical temperatures and latent heat of vaporization. Then the efficiencies are evaluated.

Ethanol implementation is limited to 250°C due to consequent thermal degradation that requires the replacement of the ethanol with time consumption operations.

This technical problem has been considered and addressed to in US 2015/0013328 A1.

The pure Ethanol (pure ethyl alcohol) degrades by decomposing into ethylene and water and other components occurs at ca. 500°C. The publication "REACTIONS OF ETHYL ALCOHOL" HERBERT E. MORRIS - Department of Chemistry, University of Alberta, Edmonton, Canada (Received September 10, 1991) represents a useful source in order to understand the behavior of Ethanol in respect of temperature decomposition.

However, several additives are added in order to preserve the WHR from corrosion or other unwanted effects.

Therefore, the additivated Ethanol cannot be implemented before 250°C +/- 10°C. However the problem, substantially, does not change in case new additives would permit to improve such limit of a few degrees.

Therefore, in view of the presence of additives, the present description, referring simply to "Ethanol", refers to a "Ethanol based working medium" in view of such mandatory presence of additives.

A combustion engine with a waste heat recovery system using ethanol as a working medium is known from DE 10 2009 039 551 A1. Here the ethanol is circulated only once in the heat recovery system, reformed upon heat exchange with the exhaust gases of the engine and, after extracting mechanical power in an expander, sent forward to an injector as a fuel for the combustion engine, without being recirculated.

### Summary of the invention

The main object of the present invention is to increase the thermodynamic efficiency of a waste heat recovery system implementing ethanol as working medium, associated to a combustion engine. This main object is achieved by a combustion engine provided with an ethanol Waste Heat Recovery System in accordance with independent claim 1.

The main principle of the invention is to permit the increasing of the highest working temperature of the ethanol, beyond the Ethanol based critical temperature, by reusing the thermal degraded ethanol as combustion engine fuel, while an additional ethanol tank is introduced for refilling the waste heat recovery circuit, by restoring a needed amount of working medium for the functioning of the waste heat recovery system (WHR).

Such additional tank could contain fresh Ethanol, namely non-degraded "Ethanol based working medium".

Alternatively, such additional tank could contain non-degraded pure Ethanol and a second additional smaller tank contains suitable additives to be mixed with the pure non-degraded Ethanol before its introduction into the WHR circuit.

Increasing the highest temperature of thermodynamic cycle implies an overall higher efficiency.

According to a preferred embodiment of the present invention, the ethanol is continuously or intermittently withdrawn from the WHR circuit and injected in the cylinders of a combustion engine associated with the WHR, while fresh ethanol is withdrawn from said fresh ethanol tank and introduced into the WHR circuit.

According to another preferred embodiment of the invention, the degraded ethanol withdrawn by the WRH and replaced by fresh one, is collected into a degraded ethanol tank and successively introduced into the engine cylinders.

In this latter case, the injection of the degraded ethanol can be postponed according to a fuel supply strategy.

According to another aspect of the invention the system, combustion engine and WHR, can be provided with a burner in order to increase the exhaust gas temperature, that, in turn, contribute to the WHR efficiency. The burner is provided with fresh air and eventually with fuel. This fuel can coincide with the degraded ethanol from the WHR and/or fresh ethanol from the fresh ethanol tank and/or another different fuel.

Another object of the invention is a method for improving an overall efficiency of a combustion engine provided with an ethanol Waste Heat Recovery System.

This other object is achieved by the combination of features of independent claim 9.

These and further objects are achieved by means of the attached claims, which describe preferred embodiment of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a sketch of concept of the present invention,
- Fig. 2 shows a detailed scheme for implementing a preferred embodiment of the present invention.

The same reference numerals and letters in the figures designate the same or functionally equivalent parts.

According to the present invention, the term "second element" does not imply the presence of a "first element", first, second, etc... are used only for improving the clarity of the description and they should not be interpreted in a limiting way.

### Detailed description of the preferred embodiments

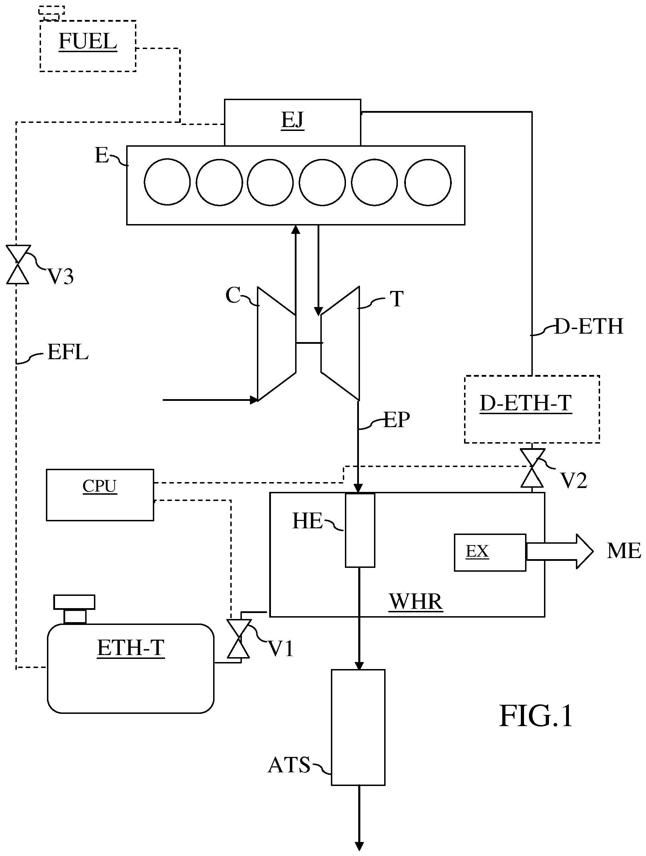

Figure 1 shows a scheme reproducing the basic concept of the present invention.

A combustion engine E, for example a six cylinder combustion engine, is preferably provided with a turbocharger T,C, with the turbine T connected to the exhaust manifold of the combustion engine and its compressor C connected to the intake manifold of the combustion engine to compress fresh air from the outside.

The combustion engine comprises injection means EJ, adapted to supply fuel into the combustion engine cylinders and an aftertreatment system ATS to eliminate or reduce the pollutants contained in the exhaust gasses before their delivery to the environment.

On the exhaust line, preferably upstream of the ATS or between devices DOC, SCR, DPF, etc.. of the ATS, acronyms well known to the skilled person in the art, is arranged a main heat exchanger HE capable of extracting heat from the exhaust gas to heat the working medium of a waste heat recovery system WHR to produce steam.

In case the combustion engine is provided with turbocharger, such heat exchanger is arranged downstream of the turbine T.

The heat recuperated by the main heat exchanger HE is, then, converted into mechanical energy ME through an expander EX, per se known.

According to the invention, a tank containing fresh ethanol ETH-T is connected to a first point of the ethanol circuit of the WHR, while another point of the ethanol circuit of the WHR is connected with the injection means EJ through the pipe line D-ETH.

A first control valve V1 is interposed between the WHR circuit and the fresh ethanol tank ETH-T and a second control valve V2 is interposed between the WHR circuit and the injection means EJ.

Elaborating means CPU control, at least, said control valves V1 and V2 in order to replace degraded ethanol with fresh ethanol, through the opening of such valves V1, V2.

The WHR system, after the condenser CD is provided with a pump P for pumping the ethanol towards the exchanger(s) and then towards the steam generator HE, etc.. Preferably, said first point is between the condenser and the pump P and said second point is immediately downstream the pump P. Therefore, said CPU is also adapted to control the pump.

The WHR system implementing a Rankine thermodynamic cycle, that in generally per se known, is modified, according the present invention, to heat the ethanol beyond the critical temperature of about 250°C or in general beyond the critical temperature of the Ethanol based medium adopted, depending on the additives added.

This means that the main heat exchanger HE can be suitably designed to recover a higher energy fraction with respect to known schemes and/or that further exchangers can be implemented in order to pre-heat the ethanol, for example to recover also heat from EGR gasses, and/or that further heating means can be implemented, such as a burner arranged just upstream of the main heat exchanger HE, namely between the turbine T and the main exchanger.

Alternatively, or in combination with a redesign of the exchangers, the protection-valve, usually adopted to by-pass the exchanger(s) when the ethanol is approaching 250°C can be adjusted/controlled to operate such WHR at a temperature beyond said 250°C.

Said elaborating means CPU are suitably adapted to account for the ethanol temperatures reached within the WHR, in order to estimate the thermal degradation of the same and control said valve V1, V2 to operate said replacement of the degraded ethanol with fresh one.

In case said CPU is adapted to control the by-pass valves (V4) of the WHR exchangers, the WHR highest temperature can be also controlled accounting for a residual amount of fresh ethanol stored in the fresh ethanol tank ETH-T. In this way, in case the fresh ethanol tank is at least near to be empty, the WHR exchanger(s) is controlled in order to slow down the ethanol degradation.

Therefore, a possible WHR ethanol temperature control can be realized as a function of the residual fresh ethanol contained into the Ethanol tank ETH-T.

In case the combustion engine is an Otto-cycle engine, the ethanol could represent the fuel burned into the combustion engine; therefore, the fresh ethanol tank ETH-T is also connected directly with the injection means EJ through a direct supply line EFL. This means that the combustion engine is called to burn fresh ethanol added with degraded ethanol coming from the WHR.

Preferably, a valve V3 is arranged on the supply line EFL in order to better manage the fresh contribution and the degraded contribution of ethanol. This means that the valves V1 - V3 are, preferably, all subject of reciprocally coherent control.

Alternatively, the combustion engine even being an Otto-cycle could be supplied with gasoline or it could be a Diesel-cycle supplied with diesel fuel. In these cases, the vehicle can be provided with an additional fuel tank FUEL directly connected with the injection means EJ. Therefore, the degraded ethanol coming from the WHR and/or the fresh ethanol coming directly from the Ethanol tank is added to the main fuel that is respectively gasoline or diesel.

A further valve can be arranged on the pipe line connecting the injection means EJ and the fuel tank FUEL.

The adoption of bio-fuel is well known, however, according to a preferred embodiment of the present invention, the pre-mixing of gasoline or diesel with degraded/fresh ethanol to obtain a bio-fuel is controlled and executed onboard of the vehicle.

Even when the Fuel tank contains a main fuel such as gasoline or diesel, the pipe EFL connecting the fresh ethanol tank with the injection means EJ can be present, preferably with its own valve V3, in those cases where the addition of ethanol to the main fuel is controlled regardless of the degradation rate of ethanol implemented into the WHR system of the invention, operating beyond the critical temperature of 250°C.

The degradation of the ethanol is strictly related to the highest temperature reached within the WHR system. Therefore, when the degradation is really low the valves V1 and V2 are intermittently or slightly opened (not necessarily at the same time) after hundreds of working hours of the WHR. On the contrary, when the degradation is really fast, the ethanol replacement can be continuous.

According to a preferred embodiment of the invention, that can be combined either with an intermittent or a continuous replacement of degraded ethanol, the degraded ethanol withdrawn from the WHR can be first collected into a degraded ethanol tank D-ETH-T arranged between said second valve V2 and said injection means EJ on said degraded ethanol pipe line D-ETH.

The implementation of this degraded ethanol tank can be really useful, even not essential, in order to perform the addition of ethanol to the main fuel according to predetermined engine supply strategies.

According to another preferred embodiment of the invention, that can be combined with the above discussed embodiments, the degraded and/or fresh ethanol can be injected into the combustion engine cylinder not previously mixed with the main fuel, but according to a RCCI combustion engine principle.

RCCI uses in-cylinder fuel blending with at least two fuels of different reactivity and multiple injections to control in-cylinder fuel reactivity to optimize combustion phasing, duration and magnitude. The process involves introduction of a low reactivity fuel into the cylinder to create a well-mixed charge of low reactivity fuel, air and recirculated exhaust gases. The high reactivity fuel is injected before ignition of the premixed fuel occurs using single or multiple injections directly into the combustion chamber. Examples of fuel pairings for RCCI are gasoline and diesel mixtures, ethanol and diesel, and gasoline and gasoline with small additions of a cetane-number booster (di-tert-butyl peroxide (DTBP)).

Therefore, the present invention finds a really favorable context if implemented in one RCCI scheme.

The mechanical energy produced by the Expander EX can be exploited to produce electrical energy and/or can be directed to the combustion engine crankshaft, in order to supplement the combustion engine in a "compound" fashion. However, any way to exploit such mechanical energy can be implemented.

The elaborating means CPU discussed above, according to a preferred embodiment of the present invention implementing said RCCI strategy can be adapted to control such degraded and main fuel injection into the combustion engine cylinder and the replacing of the ethanol used as working medium into the WHR system associated with said combustion engine.

Preferably, such elaborating means coincide with the engine control unit ECU usually implemented to control the combustion engine operation.

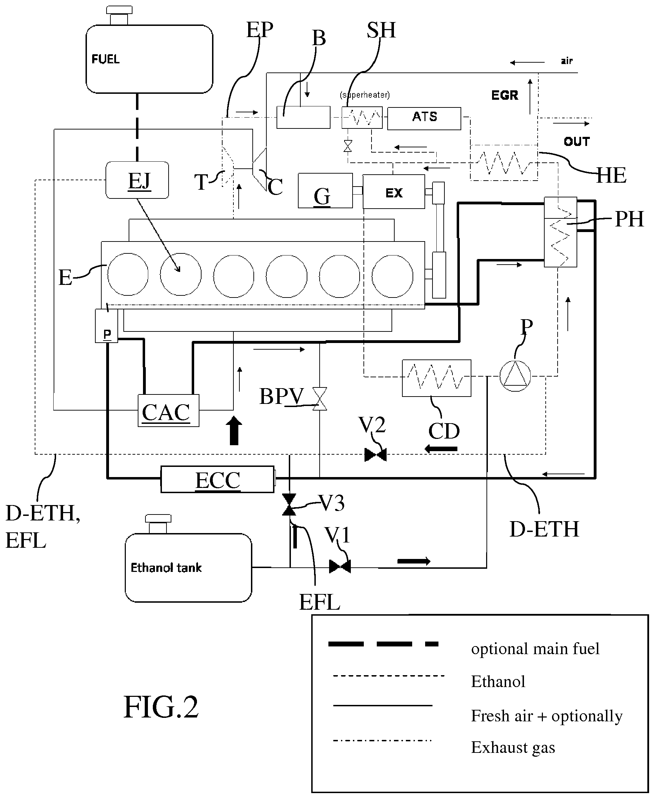

Figure 2 shows a preferred embodiment of the present invention. It should be clear that it represents a comprehensive example and that several features are not essential. The presence of elaborating means is implicit.

This scheme, in addition with respect the previous figure, shows a preferred way to connect the pipes of ethanol, fresh air and water among the components.

It should be noted that, according to figure 2, the expander EX is connected either with the engine E crankshaft and also with an electric generator G.

In addition, preferably, immediately downstream of the turbine T is arranged a burner B adapted to introduce fresh air and/or fuel (main fuel, fresh ethanol, degraded ethanol) into the exhaust stream in order to increase the exhaust gasses temperature.

Immediately downstream of the burner B is arranged a super-heater SH, connected with the WHR ethanol circuit through bypass-means, namely pipes and valves V4 and V4'.

When the super-heater SH is active, it represents the last heater for the ethanol steam before to be introduced into the expander EX.

Immediately downstream of the super-heater SH is arranged at least one of the ATS components, listed above, and then the main exchanger HE also called evaporator, being responsible to the evaporation of the ethanol.

It should be understood that, in case the super-heater is not present, then the main exchanger He is arranged before or after the ATS components, while the burner is optional.

The exhaust gasses, after passing the ATS, regardless whether the last component crossed is an ATS component or the main exchanger HE, can be recirculated according to an EGR strategy. Preferably, a valve, not shown is interposed in the EGR branch in order to adjust the EGR percentage.

According to a preferred embodiment of the invention, the EGR flow is injected into the engine intake upstream of an air filter not shown. Furthermore, the EGR can be refreshed through a cooler that exploits as cooling fluid the WHR ethanol. Thus the EGR cooler (not shown) can works as pre-heater for the WHR ethanol.

According to figure 2, the cooling circuit of the cooling engine comprises a heat exchanger PH immediately downstream of the combustion engine E. This exchanger represents another possible pre-heater for the WHR ethanol.

After these considerations, the WHR circuit comprises, in succession according to the WHR ethanol circulation:
- ethanol pump P,
- (optional) pre-heaters,
- main heater HE,
- (optional) super-heater SH,
- expander EX,
- condenser CD.

As discussed above, preferably upstream of the pump P is connected the fresh tank ETH-T and downstream if the pump P connected the withdrawing pipe D-ETH.

Figure 2, in order to simplify the comprehension of the connections, exploits four line types. The continuous thick line is implemented to indicate the cooling water. The cooling water circuit comprises, in succession according to a possible cooling water circulation:
- water pump P,
- charge air cooler CAC to refresh charge directed to the combustion engine,
- the combustion engine E,
- (optional) WHR ethanol pre-heater PH,
- (optional) EGR exchanger defining another WHR ethanol pre-heater,
- Engine coolant cooler ECC.

The preferred embodiment of figure 2 shows another cooling water circulation, where downstream of the pump P a portion of the water circulates through the engine and in parallel another portion through the charge air cooler CAC, then both the braches pass through pre-heater, depicted as a single component, then the convey together to the engine coolant cooler ECC.

About the per se known features of the WHR and of the WHR in combination with the combustion engine, we herewith recall everything disclosed in EP1674681 of the same author, and in particular, the adoption of an intake filter and the connection of the EGR pipe upstream with respect to said intake filter.

A valve BPV can be interposed in the cooling circuit in order to exclude (bypass) or include the eventual pre-heaters (PH) from being fed of warn cooling water.

As disclosed above, such additional tank could contain fresh Ethanol, namely non-degraded "Ethanol based working medium".

Alternatively, such additional tank could contain non-degraded pure Ethanol and a second additional smaller tank contains suitable additives to be mixed with the pure non-degraded Ethanol before its introduction into the WHR circuit.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer, as defined in attached claims 14 and 15.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the attached claims are deemed to be covered by this invention.

## Claims

1. Combustion engine (E) provided with a Waste Heat Recovery System (WHR) draining thermal energy from an exhaust pipe (EP) of the combustion engine (E) in order to produce mechanical energy (ME) by exploiting ethanol or ethanol based medium as working medium, wherein the combustion engine comprises injection means (EJ) to supply the combustion engine with a fuel, and wherein the WHR comprises:
- a WHR circuit comprising the following components, arranged in succession according to the circulation of the ethanol or ethanol based medium in the WHR circuit:
a) a pump (P),
b) a main heater (HE),
c) an expander (EX),
d) a condenser (CD),
- a fresh ethanol tank (ETH-T) able to contain fresh ethanol or ethanol based medium and connected with a first point of the WHR circuit via a first control valve (V1), to replace ethanol or ethanol based medium circulating in the WHR circuit with the fresh ethanol or ethanol based medium, and
- a pipe connection (D-ETH) and a second control valve (V2), connecting a second point of the WHR circuit with said injection means (EJ) in order to supply the combustion engine with ethanol or ethanol based medium from the WHR circuit,
and wherein the combustion engine further comprises control means (CPU) adapted to perform the following steps:
- adjusting a highest temperature of the ethanol or ethanol based medium in the WHR circuit, even beyond a predefined critical temperature of the ethanol or ethanol based medium,
- estimating a thermal degradation of the ethanol or ethanol based medium in the WHR circuit according to the highest temperature reached within the WHR circuit,
- adjusting the replacement of a degraded ethanol or ethanol based medium circulating in the WHR circuit with said fresh ethanol or ethanol based medium, by opening said first and second control valve (V1, V2).

2. Combustion engine according to claim 1, wherein the replacement of the degraded ethanol or ethanol based medium circulating in the WHR circuit with said fresh ethanol or ethanol based medium is adjusted as a function of the estimation of said thermal degradation.

3. Combustion engine according to any of the previous claims, further comprising a separate fuel tank (FUEL), for storing a different fuel with respect to ethanol, connected with said injection means, wherein said injection means are adapted to mix such different fuel with the degaraded ethanol or ethanol based medium from the WHR circuit in order to supply said combustion engine (E) with bio-fuel.

4. Combustion engine according to claim 1 or 2, further comprising a separate fuel tank (FUEL), for storing a different fuel with respect to ethanol, connected with said injection means, and wherein said fresh ethanol tank (ETH-T) is also connected with said injection means (EJ) directly through a dedicated pipe line (EFL), and wherein said injection means are adapted to mix such different fuel with the degraded ethanol or ethanol based medium from the WHR circuit and/or the fresh ethanol or ethanol based medium from the fresh ethanol tank (ETH-T) in order to supply said combustion engine (E) with bio-fuel.

5. Combustion engine according to claim 3 or 4, wherein said bio-fuel is obtained before its injection into the combustion engine or said bio-fuel is obtained according to a RCCI strategy.

6. Combustion engine according to any of previous claims from 1 to 5, wherein said engine exhaust pipe (EP) further comprises a burner (B) suitable to increase exhaust gasses temperature, wherein the burner is provided with fresh air and at least one among: fresh ethanol, ethanol or ethanol based medium from the WHR circuit, another fuel different from ethanol.

7. Combustion engine according to any of the previous claims, wherein said first point is arranged between said condenser (CD) and said pump (P).

8. Combustion engine according to any of the previous claims, wherein said second point is arranged immediately downstream of said pump (P).

9. Method for improving an overall efficiency of a combustion engine according to anyone of the previous claims, wherein the method comprises the following steps:
- setting the WHR so that the highest temperature exceeds a predetermined critical temperature of the ethanol or ethanol based medium,
- estimating a thermal degradation of the ethanol or ethanol based medium circulating in the WHR circuit according to the highest temperature reached within the WHR circuit,
- introducing the degraded ethanol or ethanol based medium coming from the WHR circuit into the combustion engine cylinders, by opening the second control valve (V2),
- replacing the degraded ethanol or ethanol based medium in the WHR circuit with fresh ethanol or ethanol based medium, by opening the first control valve (V1).

10. Method according to claim 9, further comprising the step of replacing the degraded ethanol or ethanol based medium of the WHR circuit with fresh ethanol or ethanol based medium as function of the estimation of said thermal degradation.

11. Method according to claim 9, further comprising a step of controlling the WHR highest temperature through bypass means and/or through a burner (B) arranged on an exhaust pipe (EP) of the combustion engine.

12. Method according to claim 9, further comprising a step of controlling an injection of fuel within said burner (B) .

13. Method according to claim 12, wherein said fuel injected into the burner is: degraded ethanol or ethanol based medium from the WHR circuit and/or fresh ethanol or ethanol based medium and/or another fuel different from ethanol or ethanol based medium.

14. Computer program comprising computer program code means adapted to perform the method of any of the claims 9 to 13, when said program is run on the control means of a combustion engine according to anyone of the claims 1 to 8.

15. A computer readable medium having a program recorded thereon, said computer readable medium comprising computer program code means adapted to perform the method of any of the claim 9 to 13, when said program is run on the control means of a combustion engine according to anyone of the claims 1 to 8.

16. Vehicle comprising the combustion engine according to any of the claims from 1 to 8.

## Patentansprüche

1. Brennkraftmaschine (E), die mit einem Abwärmerückgewinnungssystem (WHR-System) ausgerüstet ist, das Wärmeenergie von einem Abgasrohr (EP) der Brennkraftmaschine (E) abführt, um durch Nutzung von Ethanol oder eines auf Ethanol basierenden Mediums als Arbeitsmedium mechanische Energie (ME) zu erzeugen, wobei die Brennkraftmaschine Einspritzmittel (EJ) enthält, um der Brennkraftmaschine Kraftstoff zuzuführen und wobei das WHR-System Folgendes umfasst:
- einen WHR-Kreis, der die folgenden Komponenten enthält, die nacheinander entsprechend der Zirkulation des Ethanols oder des auf Ethanol basierenden Mediums in dem WHR-Kreis angeordnet sind:
a) eine Pumpe (P),
b) eine Hauptheizeinrichtung (HE),
c) einen Expander (EX),
d) einen Kondensator (CD),
- einen Frischethanol-Tank (ETH-T), der frisches Ethanol oder ein frisches auf Ethanol basierendes Medium enthalten kann und mit einem ersten Punkt des WHR-Kreises über ein erstes Steuerventil (V1) verbunden ist, um Ethanol oder ein auf Ethanol basierendes Medium, das in dem WHR-Kreis zirkuliert, durch frisches Ethanol bzw. ein frisches auf Ethanol basierendes Medium zu ersetzen, und
- eine Rohrverbindung (D-ETH) und ein zweites Steuerventil (V2), die einen zweiten Punkt des WHR-Kreises mit dem Einspritzmittel (EJ) verbinden, um der Brennkraftmaschine Ethanol oder ein auf Ethanol basierendes Medium von dem WHR-Kreis zuzuführen,
und wobei die Brennkraftmaschine ferner Steuermittel (CPU) enthält, die dafür ausgelegt sind, die folgenden Schritte auszuführen:
- Einstellen einer höchsten Temperatur des Ethanols oder des auf Ethanol basierenden Mediums in dem WHR-Kreis selbst oberhalb einer im Voraus definierten kritischen Temperatur des Ethanols oder des auf Ethanol basierenden Mediums,
- Schätzen einer thermischen Verschlechterung des Ethanols oder des auf Ethanol basierenden Mediums in dem WHR-Kreis in Übereinstimmung mit der in dem WHR-Kreis erreichten höchsten Temperatur,
- Einstellen des Austausches eines verschlechterten Ethanols oder eines verschlechterten auf Ethanol basierenden Mediums, das in dem WHR-Kreis zirkuliert, durch frisches Ethanol oder ein frisches auf Ethanol basierendes Medium durch Öffnen des ersten und des zweiten Steuerventils (V1, V2).

2. Brennkraftmaschine nach Anspruch 1, wobei der Austausch des verschlechterten Ethanols oder des verschlechterten auf Ethanol basierenden Mediums, das in dem WHR-Kreis zirkuliert, durch frisches Ethanol oder ein frisches auf Ethanol basierendes Medium als Funktion der Schätzung der thermischen Verschlechterung eingestellt wird.

3. Brennkraftmaschine nach einem der vorhergehenden Ansprüche, die ferner einen getrennten Kraftstofftank (FUEL) zum Speichern eines von Ethanol verschiedenen Kraftstoffs umfasst, der mit den Einspritzmitteln verbunden ist, wobei die Einspritzmittel dafür ausgelegt sind, einen derartigen anderen Kraftstoff mit dem verschlechterten Ethanol oder dem verschlechterten auf Ethanol basierendem Medium von dem WHR-Kreis zu mischen, um der Brennkraftmaschine (E) Biokraftstoff zuzuführen.

4. Brennkraftmaschine nach Anspruch 1 oder 2, die ferner einen getrennten Kraftstofftank (FUEL) zum Speichern eines von Ethanol verschiedenen Kraftstoffs umfasst, der mit den Einspritzmitteln verbunden ist, wobei der Frischethanol-Tank (ETH-T) direkt über eine dafür vorgesehene Rohrleitung (EFL) ebenfalls mit den Einspritzmitteln (EJ) verbunden ist und wobei die Einspritzmittel dafür ausgelegt sind, einen derartigen anderen Kraftstoff mit dem verschlechterten Ethanol oder dem verschlechterten auf Ethanol basierendem Medium von dem WHR-Kreis und/oder mit dem frischen Ethanol oder dem frischen auf Ethanol basierenden Medium von dem Frischethanol-Tank (ETH-T) zu mischen, um der Brennkraftmaschine (E) Biokraftstoff zuzuführen.

5. Brennkraftmaschine nach Anspruch 3 oder 4, wobei der Biokraftstoff erhalten wird, bevor er in die Brennkraftmaschine eingespritzt wird, oder der Biokraftstoff in Übereinstimmung mit einer RCCI-Strategie erhalten wird.

6. Brennkraftmaschine nach einem der vorhergehenden Ansprüche 1 bis 5, wobei das Kraftmaschinenabgasrohr (EP) ferner einen Brenner (B) umfasst, der die Abgastemperatur erhöhen kann, wobei der Brenner mit Frischluft und wenigstens einem der folgenden Substanzen versorgt wird: frisches Ethanol, Ethanol oder auf Ethanol basierendes Medium von dem WHR-Kreis, ein von Ethanol verschiedener weiterer Kraftstoff.

7. Brennkraftmaschine nach einem der vorhergehenden Ansprüche, wobei der erste Punkt zwischen den Kondensator (CD) und der Pumpe (P) angeordnet ist.

8. Brennkraftmaschine nach einem der vorhergehenden Ansprüche, wobei der zweite Punkt direkt stromabseitig der Pumpe (P) angeordnet ist.

9. Verfahren zum Verbessern eines Gesamtwirkungsgrades einer Brennkraftmaschine nach einem der vorhergehenden Ansprüche, wobei das Verfahren die folgenden Schritte umfasst:
- Einstellen des WHR-Systems in der Weise, dass die höchste Temperatur eine vorgegebene kritische Temperatur des Ethanols oder des auf Ethanol basierenden Mediums überschreitet,
- Schätzen einer thermischen Verschlechterung des Ethanols oder des auf Ethanol basierenden Mediums, das in dem WHR-Kreis zirkuliert, in Übereinstimmung mit der in dem WHR-Kreis erreichten höchsten Temperatur,
- Einleiten des verschlechterten Ethanols oder des verschlechterten auf Ethanol basierenden Mediums, das von dem WHR-Kreis stammt, in die Brennkraftmaschinenzylinder durch Öffnen des zweiten Steuerventils (V2),
- Ersetzen des verschlechterten Ethanols oder des verschlechterten auf Ethanol basierenden Mediums in dem WHR-Kreis durch frisches Ethanol oder ein frisches auf Ethanol basierendes Medium durch Öffnen des ersten Steuerventils (V1).

10. Verfahren nach Anspruch 9, das ferner den Schritt des Ersetzens des verschlechterten Ethanols oder des verschlechterten auf Ethanol basierenden Mediums des WHR-Kreises durch frisches Ethanol oder ein frisches auf Ethanol basierendes Medium als Funktion der Schätzung der thermischen Verschlechterung umfasst.

11. Verfahren nach Anspruch 9, das ferner einen Schritt des Steuerns der höchsten Temperatur des WHR-Systems durch Nebenleitungsmittel und/oder durch einen Brenner (B), die in einem Abgasrohr (EP) der Brennkraftmaschine angeordnet sind, umfasst.

12. Verfahren nach Anspruch 9, das ferner einen Schritt des Steuerns einer Einspritzung von Kraftstoff in den Brenner (B) umfasst.

13. Verfahren nach Anspruch 12, wobei der in den Brenner eingespritzte Kraftstoff Folgendes ist: verschlechtertes Ethanol oder ein verschlechtertes auf Ethanol basierendes Medium von dem WHR-Kreis und/oder frisches Ethanol oder ein frisches auf Ethanol basierendes Medium und/oder ein weiterer Kraftstoff, der von Ethanol oder einem auf Ethanol basierenden Medium verschieden ist.

14. Computerprogramm, das Computerprogrammcodemittel enthält, die dafür ausgelegt sind, das Verfahren nach einem der Ansprüche 9 bis 13 auszuführen, wenn das Programm in den Steuermitteln einer Brennkraftmaschine nach einem der Ansprüche 1 bis 8 abläuft.

15. Computerlesbares Medium, auf das ein Programm aufgezeichnet ist, das Computerprogrammcodemittel enthält, die dafür ausgelegt sind, das Verfahren nach einem der Ansprüche 9 bis 13 auszuführen, wenn das Programm in den Steuermitteln einer Brennkraftmaschine nach einem der Ansprüche 1 bis 8 abläuft.

16. Fahrzeug, das die Brennkraftmaschine nach einem der Ansprüche 1 bis 8 enthält.

## Revendications

1. Moteur à combustion (E) muni d'un système de récupération de chaleur perdue (WHR) qui draine l'énergie thermique qui provient d'un conduit d'échappement (EP) du moteur à combustion (E) afin de produire de l'énergie mécanique (ME) en exploitant de l'éthanol ou un milieu à base d'éthanol en tant que milieu de travail, dans lequel le moteur à combustion comprend un moyen d'injection (EJ) pour alimenter en carburant le moteur à combustion, et dans lequel le système WHR comprend :
- un circuit WHR qui comprend les composants qui suivent, agencés en succession conformément à la circulation de l'éthanol ou du milieu à base d'éthanol à l'intérieur du circuit WHR :
a) une pompe (P) ;
b) un moyen de chauffage principal (HE) ;
c) un moyen de d'expansion (EX) ; et
d) un moyen de condensation (CD) ;
- un réservoir d'éthanol frais (ETH-T) qui peut contenir de l'éthanol frais ou un milieu à base d'éthanol frais et qui est connecté avec un premier point du circuit WHR via une première soupape de commande (V1), de manière à remplacer l'éthanol ou le milieu à base d'éthanol qui circule à l'intérieur du circuit WHR par de l'éthanol frais ou par un milieu à base d'éthanol frais ; et
- une connexion de conduit (D-ETH) et une seconde soupape de commande (V2), qui connectent un second point du circuit WHR avec ledit moyen d'injection (EJ) afin d'alimenter le moteur à combustion en éthanol ou en un milieu à base d'éthanol en provenance du circuit WHR ;
et dans lequel le moteur à combustion comprend en outre un moyen de commande (CPU) qui est adapté de manière à ce qu'il réalise les étapes qui suivent :
- le réglage d'une température la plus élevée de l'éthanol ou du milieu à base d'éthanol à l'intérieur du circuit WHR, même au-delà d'une température critique prédéfinie de l'éthanol ou du milieu à base d'éthanol ;
- l'estimation d'une dégradation thermique de l'éthanol ou du milieu à base d'éthanol à l'intérieur du circuit WHR conformément à la température la plus élevée qui est atteinte à l'intérieur du circuit WHR ; et
- le réglage du remplacement d'un éthanol dégradé ou d'un milieu à base d'éthanol dégradé qui circule à l'intérieur du circuit WHR par ledit éthanol frais ou par ledit milieu à base d'éthanol frais, en ouvrant lesdites première et seconde soupapes de commande (V1, V2).

2. Moteur à combustion selon la revendication 1, dans lequel le remplacement de l'éthanol dégradé ou du milieu à base d'éthanol dégradé qui circule à l'intérieur du circuit WHR par ledit éthanol frais ou par ledit milieu à base d'éthanol frais est réglé en tant que fonction de l'estimation de ladite dégradation thermique.

3. Moteur à combustion selon l'une quelconque des revendications précédentes, comprenant en outre un réservoir de carburant séparé (FUEL) pour stocker un carburant différent par rapport à l'éthanol, lequel est connecté audit moyen d'injection, dans lequel ledit moyen d'injection est adapté de manière à ce qu'il mélange ce carburant différent avec l'éthanol dégradé ou avec le milieu à base d'éthanol dégradé en provenance du circuit WHR afin d'alimenter en biocarburant ledit moteur à combustion (E).

4. Moteur à combustion selon la revendication 1 ou 2, comprenant en outre un réservoir de carburant séparé (FUEL) pour stocker un carburant différent par rapport à l'éthanol, lequel est connecté audit moyen d'injection, et dans lequel ledit réservoir d'éthanol frais (ETH-T) est également connecté audit moyen d'injection (EJ) directement par l'intermédiaire d'une ligne de conduit dédiée (EFL), et dans lequel ledit moyen d'injection est adapté de manière à ce qu'il mélange ce carburant différent avec l'éthanol dégradé ou avec le milieu à base d'éthanol dégradé en provenance du circuit WHR et/ou avec l'éthanol frais ou avec le milieu à base d'éthanol frais en provenance du réservoir d'éthanol frais (ETH-T) afin d'alimenter en biocarburant ledit moteur à combustion (E).

5. Moteur à combustion selon la revendication 3 ou 4, dans lequel ledit biocarburant est obtenu avant son injection à l'intérieur du moteur à combustion ou ledit biocarburant est obtenu conformément à une stratégie RCCI.

6. Moteur à combustion selon l'une quelconque des revendications précédentes 1 à 5, dans lequel ledit conduit d'échappement de moteur (EP) comprend en outre un brûleur (B) qui est approprié pour augmenter la température des gaz d'échappement, dans lequel le brûleur est alimenté en air frais et en au moins un milieu pris parmi : de l'éthanol frais, de l'éthanol ou un milieu à base d'éthanol en provenance du circuit WHR, un autre carburant différent de l'éthanol.

7. Moteur à combustion selon l'une quelconque des revendications précédentes, dans lequel ledit premier point est agencé entre ledit moyen de condensation (CD) et ladite pompe (P).

8. Moteur à combustion selon l'une quelconque des revendications précédentes, dans lequel ledit second point est agencé immédiatement en aval de ladite pompe (P).

9. Procédé pour améliorer un rendement global d'un moteur à combustion selon l'une quelconque des revendications précédentes, dans lequel le procédé comprend les étapes qui suivent :
- le réglage du système WHR de telle sorte que la température la plus élevée excède une température critique prédéterminée de l'éthanol ou du milieu à base d'éthanol ;
- l'estimation d'une dégradation thermique de l'éthanol ou du milieu à base d'éthanol qui circule à l'intérieur du circuit WHR conformément à la température la plus élevée qui est atteinte à l'intérieur du circuit WHR ;
- l'introduction de l'éthanol dégradé ou du milieu à base d'éthanol dégradé qui provient du circuit WHR à l'intérieur des cylindres du moteur à combustion, en ouvrant la seconde soupape de commande (V2) ; et
- le remplacement de l'éthanol dégradé ou du milieu à base d'éthanol dégradé à l'intérieur du circuit WHR par de l'éthanol frais ou par un milieu à base d'éthanol frais, en ouvrant la première soupape de commande (V1) .

10. Procédé selon la revendication 9, comprenant en outre l'étape qui consiste à remplacer l'éthanol dégradé ou le milieu à base d'éthanol dégradé du circuit WHR par de l'éthanol frais ou par un milieu à base d'éthanol frais en tant que fonction de l'estimation de ladite dégradation thermique.

11. Procédé selon la revendication 9, comprenant en outre l'étape qui consiste à commander la température la plus élevée du système WHR par l'intermédiaire d'un moyen de dérivation et/ou par l'intermédiaire d'un brûleur (B) qui est agencé sur un conduit d'échappement (EP) du moteur à combustion.

12. Procédé selon la revendication 9, comprenant en outre l'étape qui consiste à commander une injection de carburant à l'intérieur dudit brûleur (B).

13. Procédé selon la revendication 12, dans lequel ledit carburant qui est injecté à l'intérieur du brûleur est : de l'éthanol dégradé ou un milieu à base d'éthanol dégradé en provenance du circuit WHR et/ou de l'éthanol frais ou un milieu à base d'éthanol frais et/ou un autre carburant qui est différent de l'éthanol ou du milieu à base d'éthanol.

14. Programme informatique comprenant un moyen de code de programme informatique qui est adapté de manière à ce qu'il réalise le procédé selon l'une quelconque des revendications 9 à 13, lorsque ledit programme est exécuté sur le moyen de commande d'un moteur à combustion selon l'une quelconque des revendications 1 à 8.

15. Support pouvant être lu par un ordinateur et contenant un programme enregistré, ledit support pouvant être lu par un ordinateur comprenant un moyen de code de programme informatique qui est adapté de manière à ce qu'il réalise le procédé selon l'une quelconque des revendications 9 à 13, lorsque ledit programme est exécuté sur le moyen de commande d'un moteur à combustion selon l'une quelconque des revendications 1 à 8.

16. Véhicule comprenant le moteur à combustion selon l'une quelconque des revendications 1 à 8.
